# EUROPEAN PATENT SPECIFICATION

(11) **EP 4 244 432 B1**
(45) Date of publication and mention of the grant of the patent: **07.01.2026**
(21) Application number: 21805982.2
(22) Date of filing: 11.11.2021
(51) Int. Cl.: E02F 7/10, F16L 1/24

(54) **A FLOATING PIPE COMPRISING A TUBE AND A FLOATER SURROUNDING SAID TUBE**
SCHWIMMENDES ROHR MIT EINEM ROHR UND EINEM DAS ROHR UMGEBENDEN SCHWIMMER
TUYAU FLOTTANT COMPRENANT UN TUBE ET UN FLOTTEUR ENTOURANT LEDIT TUBE

(30) Priority: 12.11.2020 NL 2026886
(43) Date of publication of application: 20.09.2023
(73) Proprietor: DDC Engineering B.V., 7421 ZP Deventer (NL)
(72) Inventor: KNOL, Dirk, 7421 ZP Deventer (NL)
(74) Representative: Arnold & Siedsma
(86) International application number: PCT/EP2021/081423
(87) International publication number: WO 2022/101362

(56) References cited:
- WO-A1-2009/103498
- WO-A1-2011/091564
- US-A1- 2005 241 832

## Description

The invention relates to a floating pipe, for instance a floating dredge pipe, comprising a tube and a floater surrounding said tube. In particular the invention relates to floating pipes, the dimensions of which are designed to fit inside a 40-ft ISO container. Such containers have inner dimensions of 12,025 mm long, 2,352 mm wide and 2,393 mm high.

The ongoing increase in scale in the dredging industry necessitate applications of floating pressure pipes with internal diameters larger than 1,000 mm. These pipes provide the transport of sand-water mixtures from dredging equipment such as cutter suction dredgers and trailing suction hopper dredgers. Driven by higher production requirements, with the increase in cutting head power and installed pump powers, there is a need to increase the diameters of the floating pressure pipes, otherwise the flow speeds, losses and wear in the existing pipe systems will become too large.

To make these pipes float, floaters around the pipe generate an upward force through their displacement of water that keeps the pipe filled with dredge mixture afloat. Like the pipes, these floaters are tubular in shape, usually with sloping ends. The floaters are built on an inner pipe, made of steel or glass fiber reinforced epoxy, provided with a foam body and a fiber reinforced cover of rubber or polyurethane. These floaters are built using wrapping machines. The floater rotates while foam, reinforcement material and polymers are applied to the inner tube. After construction, the floater is vulcanized in an autoclave, provided that rubber elastomers have been used. Floaters may also be produced by rotational molding in a mold from polyethylene or may be produced by application of elastomers such at polyurethane compounds or similar elastomers which do not require vulcanization.

US 2005/0241832 A1 discloses a buoyancy system including a plurality of buoyancy joints distributed along a riser system. Each joint can include a riser pipe, an external frame disposed around a riser and a vessel, and a buoyant cladding disposed between the vessel and the frame.

WO 2009/103498 A1 discloses a floating device for pipes, comprising at least two floating elements each comprising a substantially semi-tubular body and removably associable so as to define a pipe housing seat.

WO 2011/091564 A1 discloses a mud discharging pipe floater comprises two semi-tubular floater main bodies having an internal wall layer, an external wall layer and a sealing cavity structure and composed of a metal reinforced framework layer and an elastic material layer. The whole surface of the metal reinforced framework layer is coated with the elastic material layer.

The floaters must be capable of being transported in standard 40-ft ISO shipping containers. Due to the increasing pipe diameters, it becomes necessary to use a larger floater volume. However, the diameter of these floaters then exceeds the internal dimensions of a standard shipping container, and it would be necessary to produce floaters that consist of several smaller parts which must be assembled together on site to build the float. This may be time consuming and expensive.

The invention addresses the above problem.

According to the invention the circumference of the floater, seen in cross section in a central part of the floating pipe, is a rounded square or a squircle. The terms "square" in this respect should be understood to include equivalent rectangle shapes which may deviate from perfect squares, in order for the floater to fit in the respective shipping container.

Preferably the largest diameter, which is a diagonal of the floater, seen in cross section in a central part of the floating pipe, is between 2,353 mm (i.e. larger than the width of a 40-ft ISO container) and 3,354 mm (i.e. smaller than the maximum inner diameter of a 40-ft ISO container), preferably between 2,500 mm and 3,354 mm, more preferably approximately 2,570 mm. Preferably the smallest diameter, which is a width and/or height of the floater, seen in cross section in a central part of the floating pipe, is smaller than 2,352 mm (i.e. smaller than the width of a 40-ft ISO container), preferably between 2,150 mm and 2,350 mm, more preferably approximately 2,250 mm.

Preferably the circumference of the tube, seen in cross section in a central part of the floating pipe, is a circle. In particular, the inner diameter of the tube is between 800 mm and 1,500 mm, preferably between 1,000 mm and 1,200 mm, preferably approximately 1,100 mm. Preferably, in order to fit in a 40-ft ISO container, the length of the pipe is between 10,000 mm and 12,025 mm, preferably between 11,000 mm and 12,000 mm, more preferably approximately 11,800 mm. Preferably, in order to fit in a 40-ft ISO container, the length of the floater is between 8000 mm and 12,000 mm, preferably between 9,000 and 11,000, more preferably 10,500 mm. If shipping containers of other lengths (such as an 20-ft ISO container) or other sizes are used for shipping, the above mentioned sizes should be adapted accordingly.

Preferably the tube is provided with flanges at both outer ends which flanges are arranged to releasably connect two adjacent tubes to each other. Preferably the tube is made of a metal, such as steel, preferably Q345B steel, or of a glass fibre reinforce epoxy.

Preferably the floater 3 comprises an interior body made of a closed cell foam, such as foam 90. Preferably the floater comprises a outer cover made of rubber, such as NR or SBR, which is preferably between 10 and 40 mm, preferably between 15 and 25 mm, more preferably approximately 20 mm thick. Preferably the floater comprises an inner pipe arranged around the tube, which inner pipe is connected at its outer ends to the outer cover, and the interior body is disposed between the inner pipe and the outer cover. Preferably the inner pipe is made of a metal, such as steel, preferably S235 steel.

The invention will be illustrated by means of a preferred embodiment, with reference to the figures, wherein:

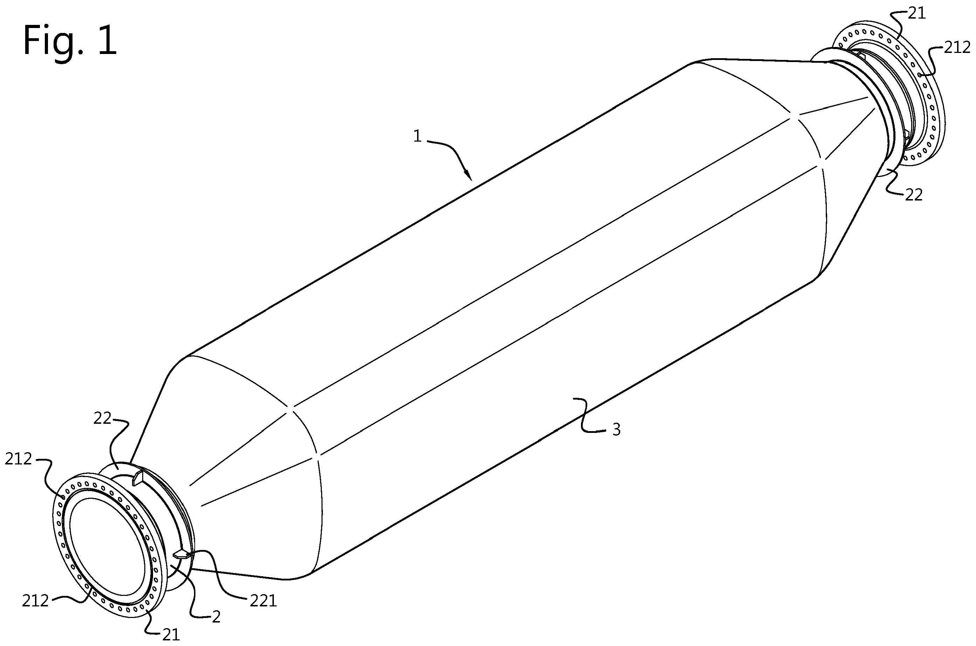

Figure 1 is a perspective view of a floating dredging hose in accordance with the invention;
Figure 2 is a partial longitudinal section of the dredging hose of figure 1;
Figures 3 is a cross section of the dredging hose of figure 1; and

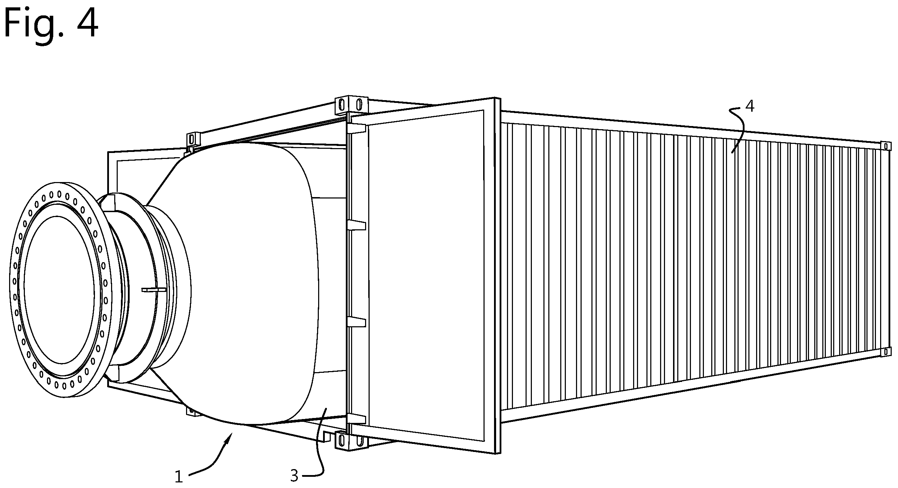

Figure 4 is a perspective of the floating dredging hose of figure 1 which is partially inserted in a 40-ft ISO shipping container.

According to figures a floating dredge pipe 1 comprises a steel tube 2 having flanges 21 at both ends. Each flange is provided with holes 211 for connecting two flanges 21 of two adjacent dredge pipes 1, and at least one of said flanges 21 is provided with a groove 212 for accommodating a rubber seal. Steel rings 22 are mounted on the tube 2 by means of gussets 221 near both ends of the tube 22, in order to contain the floater 3, which surrounds the tube 2 but is separate therefrom, between them.

The floater 3 comprises an inner steel pipe 31 and a rubber cover 32 connected thereto at both ends so as to enclose a floater volume which is filled with a closed cell foam which forms an interior body 33 of the floater 3.

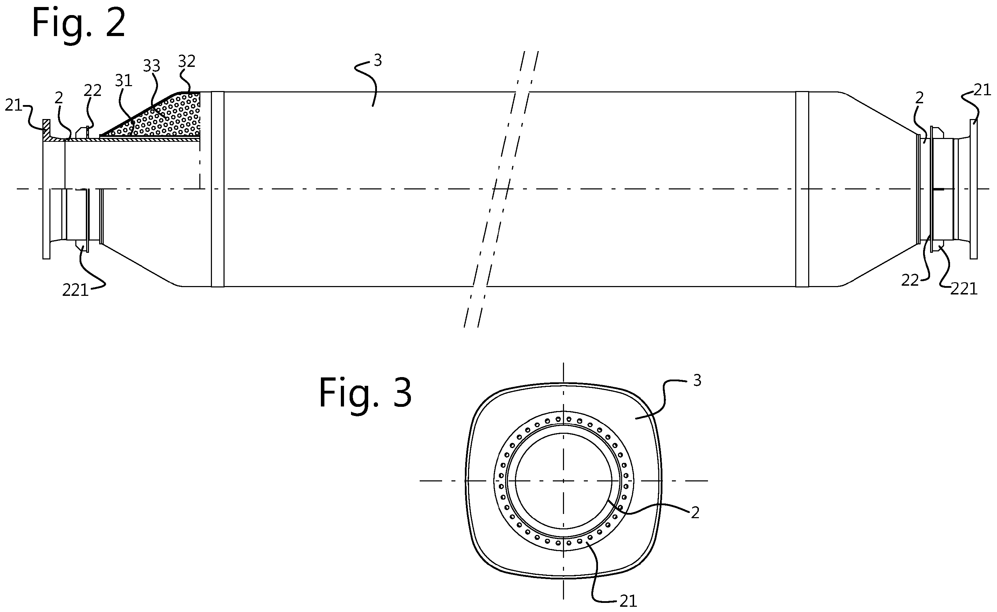

In this exemplary embodiment, the steel tube 2 has a length of 11,800 mm and an inner diameter of 1,100 mm. The length of the floater 3 is 10.500 mm and the floater has conical, sloping ends. As seen in the cross section of figure 3, the circumference of the floater 3 is approximately a rounded square or squircle, and the diagonal between the rounder corners of the floater is 2,570 mm, whereas the width and height of the floater is 2,250 mm. In that manner the floater narrowly fits inside the container 4, thereby maximizing the floating capacity of the dredge pipe 1.

The invention has thus been described by means of a preferred embodiment. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein. An element is to be considered equivalent to an element specified in the claims at least if said element performs substantially the same function in substantially the same way to yield substantially the same result as the element specified in the claims.

## Claims

1. A floater (3) for surrounding a tube (2) of a floating dredge pipe (1), in particular wherein the inner diameter of the tube (2) is between 800 mm and 1,500 mm, **characterized in that** the circumference of the floater (3), seen in cross section in a central part of the floater (3), is a rounded square or a squircle.

2. A floating dredge pipe (1) comprising a tube (2) and a floater (3) in accordance with claim 1 surrounding said tube (2).

3. The floating pipe in accordance with claim 2, wherein the dimensions of the floating pipe (1) are designed to fit inside a 40-ft ISO container (4), having inner dimensions of 12,025 mm long, 2,352 mm wide and 2,393 mm high.

4. The floating pipe in accordance with claim 2 or 3, wherein the largest diameter, which is a diagonal of the floater (3), seen in cross section in a central part of the floating pipe (1), is between 2,353 mm and 3,354 mm, preferably between 2,500 mm and 3,354 mm, more preferably approximately 2,570 mm.

5. The floating pipe in accordance with claim 2, 3 or 4, wherein the smallest diameter, which is a width and/or height of the floater (3), seen in cross section in a central part of the floating pipe (1), is smaller than 2,352 mm, preferably between 2,150 mm and 2,350 mm, more preferably approximately 2,250 mm.

6. The floating pipe in accordance with any of the previous claims 2 - 5, wherein the circumference of the tube (2), seen in cross section in a central part of the floating pipe (1), is a circle.

7. The floating pipe in accordance with any of the previous claims 2 - 6, wherein the inner diameter of the tube (2) is between 1,000 mm and 1,200 mm, preferably approximately 1,100 mm.

8. The floating pipe in accordance with any of the previous claims 2 - 7, wherein the length of the pipe (2) is between 10,000 mm and 12,025 mm, preferably between 11,000 mm and 12,000 mm, more preferably approximately 11,800 mm.

9. The floating pipe in accordance with any of the previous claims 2 - 8, wherein the length of the floater (3) is between 8000 mm and 12,000 mm, preferably between 9,000 and 11,000, more preferably 10,500 mm.

10. The floating pipe in accordance with any of the previous claims 2 - 9, wherein the tube (2) is provided with flanges (21) at both outer ends which flanges (21) are arranged to releasably connect two adjacent tubes (2) to each other.

11. The floating pipe in accordance with any of the previous claims 2 - 10, wherein the tube (2) is made of a metal, such as steel, preferably Q345B steel.

12. The floating pipe in accordance with any of the previous claims 2 - 11, wherein the floater (3) comprises an interior body (33) made of a closed cell foam, such as foam 90.

13. The floating pipe in accordance with any of the previous claims 2 - 12, wherein the floater (3) comprises a outer cover (32) made of rubber, such as NR or SBR, which is preferably between 10 and 40 mm, preferably between 15 and 25 mm, more preferably approximately 20 mm thick.

14. The floating pipe in accordance with claims 12 and 13, wherein the floater (3) comprises an inner pipe (31) arranged around the tube (2), which inner pipe (31) is connected at its outer ends to the outer cover (32), and the interior body (33) is disposed between the inner pipe (31) and the outer cover (32).

15. The floating pipe in accordance with claim 14, wherein the inner pipe (31) is made of a metal, such as steel, preferably S235 steel.

## Patentansprüche

1. Schwimmkörper (3) zum Umschließen eines Schlauchs (2) eines Schwimmbaggerrohrs (1), insbesondere wobei der Innendurchmesser des Schlauchs (2) zwischen 800 mm und 1.500 mm ist, **dadurch gekennzeichnet, dass** der Umfang des Schwimmkörpers (3), in einem Querschnitt in einem mittleren Teil des Schwimmkörpers (3) betrachtet, ein abgerundetes Quadrat oder ein Squircle ist.

2. Schwimmbaggerrohr (1), umfassend einen Schlauch (2) und einen Schwimmkörper (3) nach Anspruch 1, der den Schlauch (2) umschließt.

3. Schwimmrohr nach Anspruch 2, wobei die Abmessungen des Schwimmrohrs (1) ausgelegt sind, um in einen 40-Fuß-ISO-Container (4) zu passen, der Innenabmessungen von 12.025 mm Länge, 2.352 mm Breite und 2.393 mm Höhe aufweist.

4. Schwimmrohr nach Anspruch 2 oder 3, wobei der größte Durchmesser, der eine Diagonale des Schwimmkörpers (3) ist, in einem Querschnitt in einem mittleren Teil des Schwimmrohrs (1) betrachtet, zwischen 2.353 mm und 3.354 mm, vorzugsweise zwischen 2.500 mm und 3.354 mm, mehr bevorzugt etwa 2.570 mm ist.

5. Schwimmrohr nach Anspruch 2, 3 oder 4, wobei der kleinste Durchmesser, der eine Breite und/oder Höhe des Schwimmkörpers (3) ist, in einem Querschnitt in einem mittleren Teil des Schwimmrohrs (1) betrachtet, kleiner als 2.352 mm, vorzugsweise zwischen 2.150 mm und 2.350 mm, mehr bevorzugt etwa 2.250 mm ist.

6. Schwimmrohr nach einem der vorstehenden Ansprüche 2 bis 5, wobei der Umfang des Schlauchs (2), in einem Querschnitt in einem mittleren Teil des Schwimmrohrs (1) betrachtet, ein Kreis ist.

7. Schwimmrohr nach einem der vorstehenden Ansprüche 2 bis 6, wobei der Innendurchmesser des Schlauchs (2) zwischen 1.000 mm und 1.200 mm, vorzugsweise etwa 1.100 mm ist.

8. Schwimmrohr nach einem der vorstehenden Ansprüche 2 bis 7, wobei die Länge des Rohrs (2) zwischen 10.000 mm und 12.025 mm, vorzugsweise zwischen 11.000 mm und 12.000 mm, mehr bevorzugt etwa 11.800 mm ist.

9. Schwimmrohr nach einem der vorstehenden Ansprüche 2 bis 8, wobei die Länge des Schwimmkörpers (3) zwischen 8000 mm und 12.000 mm, vorzugsweise zwischen 9.000 und 11.000, mehr bevorzugt 10.500 mm ist.

10. Schwimmrohr nach einem der vorstehenden Ansprüche 2 bis 9, wobei der Schlauch (2) an beiden äußeren Enden mit Flanschen (21) versehen ist, wobei die Flansche (21) eingerichtet sind, um zwei angrenzende Schläuche (2) lösbar miteinander zu verbinden.

11. Schwimmrohr nach einem der vorstehenden Ansprüche 2 bis 10, wobei der Schlauch (2) aus einem Metall, wie Stahl, vorzugsweise Q345B-Stahl, hergestellt ist.

12. Schwimmrohr nach einem der vorstehenden Ansprüche 2 bis 11, wobei der Schwimmkörper (3) einen Innenkörper (33) umfasst, der aus einem geschlossenzelligen Schaumstoff, wie Schaumstoff 90, hergestellt ist.

13. Schwimmrohr nach einem der vorstehenden Ansprüche 2 bis 12, wobei der Schwimmkörper (3) eine äußere Hülle (32) umfasst, die aus Gummi, wie NR oder SBR, hergestellt ist, die vorzugsweise zwischen 10 und 40 mm, vorzugsweise zwischen 15 und 25 mm, mehr bevorzugt etwa 20 mm dick ist.

14. Schwimmrohr nach den Ansprüchen 12 und 13, wobei der Schwimmkörper (3) ein Innenrohr (31) umfasst, das um den Schlauch (2) eingerichtet ist, wobei das Innenrohr (31) an seinen äußeren Enden mit der äußeren Hülle (32) verbunden ist und der Innenkörper (33) zwischen dem Innenrohr (31) und der äußeren Hülle (32) angeordnet ist.

15. Schwimmrohr nach Anspruch 14, wobei das Innenrohr (31) aus einem Metall, wie Stahl, vorzugsweise Stahl S235, hergestellt ist.

## Revendications

1. Flotteur (3) destiné à entourer un tube (2) d'une conduite de dragage flottante (1), en particulier dans lequel le diamètre intérieur du tube (2) est compris entre 800 mm et 1 500 mm, **caractérisé en ce que** la circonférence du flotteur (3), vue en coupe transversale dans une partie centrale du flotteur (3), est un carré arrondi ou un cercle.

2. Conduite de dragage flottante (1) comprenant un tube (2) et un flotteur (3) selon la revendication 1 entourant ledit tube (2).

3. Tuyau flottant selon la revendication 2, dans lequel les dimensions du tuyau flottant (1) sont conçues pour s'adapter à l'intérieur d'un conteneur ISO (4) de 40 pieds, ayant des dimensions intérieures de 12 025 mm de long, 2 352 mm de large et 2 393 mm de haut.

4. Tuyau flottant selon la revendication 2 ou 3, dans lequel le plus grand diamètre, qui est une diagonale du flotteur (3), vu en coupe transversale dans une partie centrale du tuyau flottant (1), est compris entre 2 353 mm et 3 354 mm, de préférence entre 2 500 mm et 3 354 mm, plus préférablement environ 2 570 mm.

5. Tuyau flottant selon la revendication 2, 3 ou 4, dans lequel le plus petit diamètre, qui est une largeur et/ou une hauteur du flotteur (3), vu en coupe transversale dans une partie centrale du tuyau flottant (1), est inférieur à 2 352 mm, de préférence entre 2 150 mm et 2 350 mm, plus préférablement environ 2 250 mm.

6. Tuyau flottant selon l'une quelconque des revendications 2 à 5 précédentes, dans lequel la circonférence du tube (2), vue en coupe transversale dans une partie centrale du tuyau flottant (1), est un cercle.

7. Tuyau flottant selon l'une quelconque des revendications 2 à 6 précédentes, dans lequel le diamètre intérieur du tube (2) est compris entre 1 000 mm et 1 200 mm, de préférence environ 1 100 mm.

8. Tuyau flottant selon l'une quelconque des revendications 2 à 7 précédentes, dans lequel la longueur du tuyau (2) est comprise entre 10 000 mm et 12 025 mm, de préférence entre 11 000 mm et 12 000 mm, plus préférablement environ 11 800 mm.

9. Tuyau flottant selon l'une quelconque des revendications 2 à 8 précédentes, dans lequel la longueur du flotteur (3) est comprise entre 8 000 mm et 12 000 mm, de préférence entre 9 000 et 11 000, plus préférablement 10 500 mm.

10. Tuyau flottant selon l'une quelconque des revendications 2 à 9 précédentes, dans lequel le tube (2) est pourvu de brides (21) au niveau de deux extrémités extérieures, ces brides (21) étant conçues pour relier de manière amovible deux tubes adjacents (2) l'un à l'autre.

11. Tuyau flottant selon l'une quelconque des revendications 2 à 10 précédentes, dans lequel le tube (2) est constitué d'un métal, tel que l'acier, de préférence l'acier Q345B.

12. Tuyau flottant selon l'une quelconque des revendications 2 à 11 précédentes, dans lequel le flotteur (3) comprend un corps intérieur (33) constitué d'une mousse à cellules fermées, telle que la mousse 90.

13. Tuyau flottant selon l'une quelconque des revendications 2 à 12 précédentes, dans lequel le flotteur (3) comprend un couvercle extérieur (32) en caoutchouc, tel que NR ou SBR, dont l'épaisseur est de préférence comprise entre 10 et 40 mm, de préférence entre 15 et 25 mm, plus préférablement environ 20 mm.

14. Tuyau flottant selon les revendications 12 et 13, dans lequel le flotteur (3) comprend un tuyau intérieur (31) agencé autour du tube (2), lequel tuyau intérieur (31) est relié au niveau de ses extrémités extérieures au couvercle extérieur (32), et le corps intérieur (33) est disposé entre le tuyau intérieur (31) et le couvercle extérieur (32).

15. Tuyau flottant selon la revendication 14, dans lequel le tuyau intérieur (31) est constitué d'un métal, tel que l'acier, de préférence l'acier S235.
